# EUROPÄISCHE PATENTSCHRIFT

(11) **EP 0 852 650 B1**
(45) Veröffentlichungstag und Bekanntmachung des Hinweises auf die Patenterteilung: **17.03.1999**
(21) Anmeldenummer: 96930023.5
(22) Anmeldetag: 11.09.1996
(51) Int. Cl.: E05F 15/16

(54) **GETRIEBEMOTOR-STELLANTRIEB, INSBESONDERE FENSTERHEBER- BZW. SCHIEBEDACHANTRIEB FÜR EIN KRAFTFAHRZEUG**
GEARED MOTOR ACTUATOR, IN PARTICULAR WINDOW OR SLIDING ROOF DRIVE FOR A MOTOR VEHICLE
MECANISME D'ENTRAINEMENT POUR GROUPE MOTO-REDUCTEUR, NOTAMMENT MECANISME D'ACTIONNEMENT D'UN LEVE-VITRES OU D'UN TOIT OUVRANT POUR AUTOMOBILE

(30) Priorität: 28.09.1995 DE 29515515 U
(43) Veröffentlichungstag der Anmeldung: 15.07.1998
(73) Patentinhaber: SIEMENS AKTIENGESELLSCHAFT, 80333 München (DE)
(72) Erfinder: REDELBERGER, Harald, D-97273 Kürnach (DE)
(86) Internationale Anmeldenummer: DE9601705
(87) Internationale Veröffentlichungsnummer: WO9712108

(56) Entgegenhaltungen:
- DE-A- 3 736 218
- DE-A- 3 913 107
- DE-A-19 536 207
- DE-U- 9 217 563
- DE-U- 9 313 015
- GB-A- 2 268 287

## Beschreibung

Die Erfindung bezieht sich auf einen elektromotorischen Stellantrieb gemäß Anspruch 1.

Durch die DE-U-92 17 563 ist ein elektromotorischer Stellantrieb für ein Schließteil, z.B. für ein Kraftfahrzeug-Fenster oder ein Kraftfahrzeug-Schiebedach, mit elektromotorischer Erfassung der Position und Speicherung der Position des Schließteils bekannt; bei Erreichen einer bestimmten Distanz vor einer Endposition des Schließteils wird die Motorleistung gemindert und dadurch die Bewegungsgeschwindigkeit auf einen Mindestwert herabgeregelt, um einerseits ein sanftes und andererseits ein sicheres Einlaufen in die Endposition gewährleisten zu können. Für einen Einklemmschutz ist außerdem eine Überwachung der jeweils aktuellen Leistungsaufnahme des Elektromotors im Vergleich zu einer zuvor abgespeichterten Leistungsaufnahme vorgesehen.

Durch die EP-B1-0 261 525 ist ein Getriebemotor-Stellantrieb für einen Kraftfahrzeug-Fensterheber mit einem Schneckengetriebe bekannt, dessen auf einem verlängerten Motorwellenende vorgesehene Schneckehwelle ein Schneckenrad antreibt, welches in mittelbarer axialer formschlüssiger Steckverbindung mit einer abtriebsseitigen Mitnehmerscheibe steht, die den übrigen Fensterhebermechanismus antreibt; über die Schnecken-Getriebeanordnung wird die Fensterscheibe durch den Elektromotor mit vollem Moment in ihre jeweilige Endposition "Fenster geschlossen" bzw. "Fenster geöffnet" bis zur Erreichung eines Endanschlages angetrieben. Zur Abdämpfung der dabei ansonsten auf den Motor und die übrigen Getriebekonstrukzionszeile einwirkenden Stoßbelastungen ist ein elastisches Dämpfungselement zwischen dem von der Motorwelle über die Schneckenwelle angetriebenen Schneckenrad einerseits und der axial vorgelagerten, durch eine Steckverbindung formschlüssig in Mitnahmeverbindung stehenden Mitnehmerscheibe andererseits vorgesehen, so daß beim Auflaufen des Antriebes in eine der beiden zuvor geschilderten Endpositionen der Anschlagstoß in radialer und tangentialer Richtung gemildert bzw. abfangen werden kann. Es kann auch vorgesehen werden, anstelle eines gesonderten Dämpfungselementes, Bauteile selbst, innerhalb des Übertragungsweges zwischen der Schneckenwelle und dem Abtrieb der Mitnehmerscheibe z.B. durch elastische Speichen, im Sinne einer Stoßbelastungsdämpfung auszubilden.

Durch die DE-A1-44 32 955 ist ein elektromotorischer Antrieb für eine Kraftfahrzeug-Fensterscheibe bekannt, bei der die Steuervorrichtung mit einer Überschußkraftbegrenzung (Ü.K.B) derart ausgerüstet ist, daß die Hubbewegung der Fensterscheibe beendet wird, wenn diese eine der beiden Endpositionen mit einem entsprechenden Endanschlag erreicht. Im vorgenannten bekannten Fall ist zusätzlich eine selbsttätige Abschaltung der Überschußkraftbegrenzung vor dem Fensterscheibeneinlauf in die obere Dichtung vorgesehen, derart daß die beim Scheibeneinlauf in die Dichtung auftretenden erhöhten Antriebskräfte nicht zu einer Auslösung der Überschußkraftbegrenzung führen. Dazu ist die diesem Abstand entsprechende Scheibenhöhenlage dadurch abgespeichert, daß der Fensterscheibe eine Referenzlage bei Schließstellung mit Anlage ihrer Oberkante am oberen Endanschlag fest zugeorndet ist, von der aus dann über einen Positions- oder Bewegungszähler das Erreichen des definierten Abstandes bei Aufwärtsbewegung der Scheibe sensorisch erfaßt und dadurch automatisch die Überschußkraftbegrenzung abgeschaltet werden kann.

Gemäß Aufgabe vorliegender Erfindung soll der konstruktive und damit fertigungstechnische und montagetechnische Aufwand für einen Getriebemotor-Stellantrieb, insbesondere Fensterheber- bzw. Schiebedachantrieb in einem Kraftfahrzeug, bei gewährleistetem Schutz gegenüber Schäden durch Stoßbelastungen vermindert werden.

Die Lösung dieser Aufgabe gelingt mit einem elektromotorischen Antrieb gemäß Patentanspruch 1; vorteilhafte Ausgestaltungen der Erfindung sind jeweils Gegenstand der Unteransprüche.

Durch die erfindungsgemäße Maßnahme kann unter voller Ausnutzung der motorischen Antriebsleistung für eine möglichst schnelle Öffnungs- bzw. Schließbewegung des Schließteils auf gesonderte Dämpfungs-Zwischenteile bzw. die spezielle, im Sinne einer Stoßbelastung dämpfende elastische Ausbildung von Zwischenübertragungsmitteln, insbesondere von Speichen des Schneckenrades bzw. der Mitnehmerscheibe eines dem antreibenden Elektromotor nachgeschalteten Schneckengetriebes, verzichtet werden; nach einer Ausgestaltung der Erfindung in besonders fertigungs- und montagetechnisch aufwandsarmer Weise Schneckenrad und Mitnehmerscheibe zu einem einfach herstellbaren massiven, insbesondere spritzgegossenen, Bauteil zusammengefaßt.

Zweckmäßigerweise wird als Steuervorrichtung eine an sich vorhandene, z.B. der zuvor genannten DE-A1-44 32 955 ähnliche, Vorrichtung zur motorischen Betätigung einer Fensterscheibe eines Kraftfahrzeuges mitverwendet, wobei lediglich deren elektrische Ansteuerung geringfügig zu ergänzen ist.

Durch eine einmalige, lediglich z.B. nach einem Spannungsausfall zu wiederholende, Normierung wird eine der beiden Endpositionen durch deren Anfahren initialisiert und festgehalten; zweckmäßigerweise wird dazu bei einem Fensterheberantrieb bzw. Schiebedachantrieb die Endposition vorgesehen, in die das Schließteil aufgrund der dort vorhandenen Dichtung trotz erfindungsgemäß nicht vorhandenem getriebeseitigem Dämpfungselement hinreichend stoßgedämpft einlaufen kann. Die andere Endposition, insbesondere Schließstellung, ist dann aufgrund des Scheiben- bzw. Schiebedachhubweges z.B. durch einen inkrementalen Sensor derart vorgegeben, daß durch eine entsprechende Vorgabe an die Steuervorrichtung der das Schließteil antreibende Elektromotor kurz vor Erreichen der anderen Endposition abschaltbar und das Schließteil ohne Stoßbelastung aufgrund seiner Bewegungsenergie in die endgültige Endposition bringbar ist.

Die Position des Schließteils bzw. dessen jeweiliger Hubweg bzw. dessen jeweilige augenblickliche Geschwindigkeit lassen sich in einfacher Weise von zumindest einem, dem Antriebsmotor zugeordneten Sensor, z.B. Hall-Sensor, durch Erfassung von dessen Impulszahlen bzw. Impulsabständen bestimmen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: einen radialen Schnitt durch das Getriebegehäuse eines motorischen Kraftfahrzeug-Fensterheberantriebs;
- FIG 2: ein Blockschaltbild mit den wesentlichen Bauteilen der Hubbewegung sowie Hubwegerfassung des Fensters;

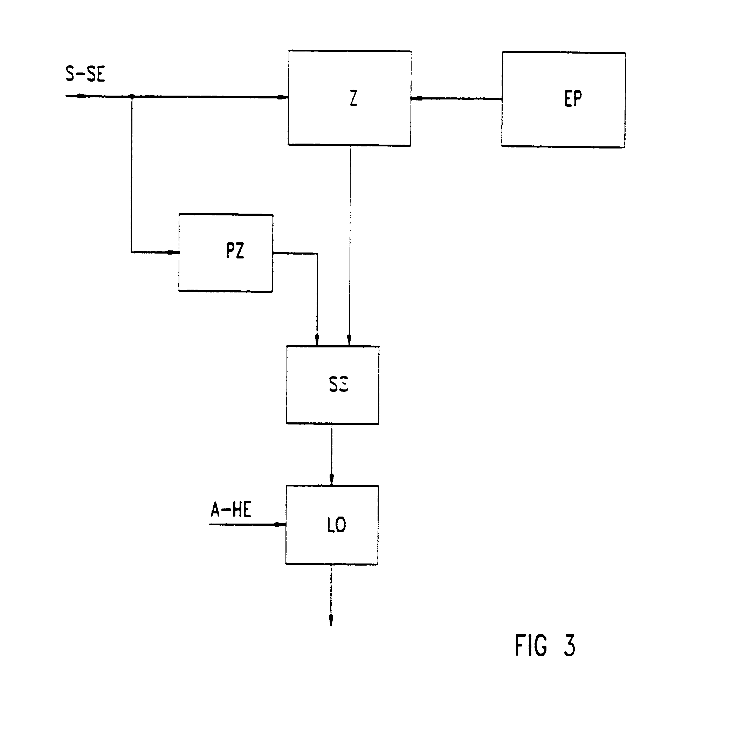

- FIG 3: ein Blockschaltbild mit den wesentlichen Bauteilen der Steuereinheit der Hubbewegung sowie Hubwegerfassung gemäß FIG 2.

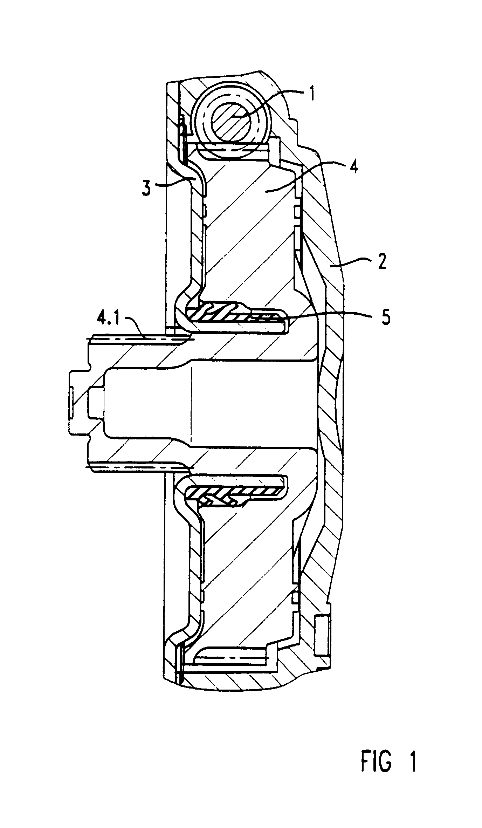

FIG 1 zeigt den radialen Schnitt durch ein Getriebe eines Kraftfahrzeug-Fensterheberantriebes mit einem topfförmigen Getriebegehäuse 2, das durch einen Getriebegehäusedeckel 3 feuchtigkeitsdicht verschließbar ist. In einer z.B. durch die DE-U-89 03 714 bekannten Bauart eines Verstellantriebes ragt die als Schneckenwelle 1 verlängerte Rotorwelle eines Kommutatormotors in das an das Motorgehäuse des Kommutatormotors angeflanschte Getriebegehäuse 2;3 und treibt dort ein mit der Schneckenwelle 1 kämmendes Schneckenrad 4 an, das auf einem Lagerhals des Getriebegehäusedeckels 3 drehbar gelagert und gegenüber diesem durch eine dynamische Dichtung 5 abgedichtet ist.

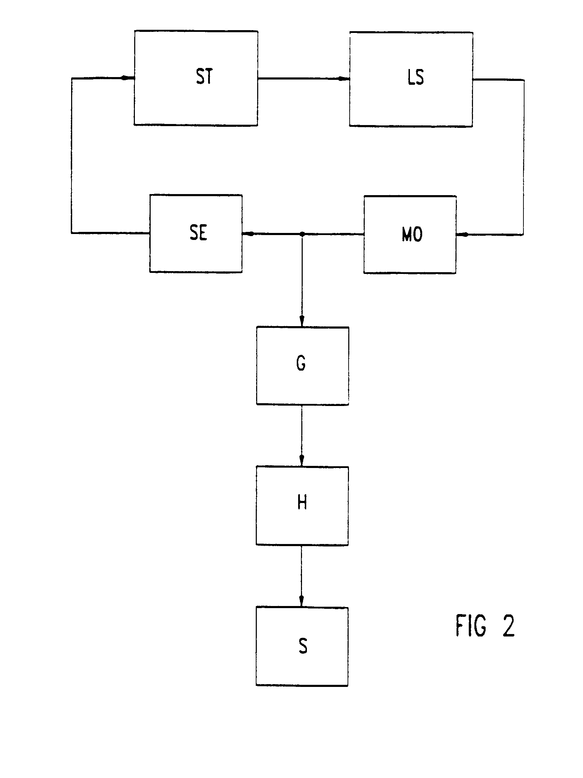

In vorteilhafter Weise ist das Schneckenrad 4 als massives einstückiges Bauteil, insbesondere Kunststoff-Spritzgußteil, gleichzeitig als abtriebseitiger Mitnehmer ausgebildet, der durch eine zentrale Öffnung des Getriebegehäusedeckels 3 nach außen ragt und mit einem Antriebsritzel 4.1 versehen ist, an das der Hebermechanismus H gemäß FIG 2 zur Hubbewegung der Scheibe S ankoppelbar ist.

Der über das Getriebe G den Hebermechanismus H antreibende Elektromotor MO, insbesondere Kommutatormotor, wird entsprechend den Vorgaben einer Steuervorrichtung ST über einen Leistungsschalter LS in die Zustände Rechtslauf bzw. Linkslauf bzw. Stillstand gebracht. Als Leistungsschalter LS können zwei Umschaltrelais oder ein Doppelrelais oder auch ein Halbleiterschalter, insbesondere in H-Brückenschaltung, zum Einsatz kommen. Die den Leistungsschalter LS und damit den Elektromotor MO steuernde Steuervorrichtung ST steht in Abhängigkeit von dem Ausgangssignal S-SE eines Sensors SE, der drehrichtungs- bzw. drehzahlproportionale Signale des Antriebes, insbesondere des Elektromotors MO, dem Eingang der Steuereinheit ST zuführt.

Zweckmäßigerweise wird ein an sich bekannter Sensor SE vorgesehen, der sowohl die Drehrichtung als auch die Drehgeschwindigkeit des Elektromotors MO aufgrund definiert beabstandeter Signale erfassen kann. Üblicherweise werden dazu zwei im Umfangswinkel von 90°C beabstandete, insbesondere in das Bürstensystem des permanenterregten Elektromotors MO integrierte, einem zweipoligen Magnetrad auf der Rotorwelle des Elektromotors MO zugeordnete Hall-Sonden vorgesehen. Dadurch ergeben sich sensorseitig zwei phasenverschobene, vorzugsweise rechteckförmige, Signale. Durch die Phasenunterschiede der Signale ist die Drehrichtung des Elektromotors MO und damit die Richtung der Hubbewegung der Scheibe S festgelegt; z.B. entspricht ein Rechtslauf des Motors MO einem Heben der Scheibe S und ein Linkslauf des Motors MO einem Senken der Scheibe S. Durch Zählen der Flanken der Signale ist der Hubweg der Scheibe S bestimmbar. Die Geschwindigkeit des Elektromotors MO und wegen der festen Übersetzung zum Hebermechanismus H damit auch die Hubgeschwindigkeit der bewegten Scheibe S ist umkehrt proportional zu den zeitlichen Abständen der vom Sensor SE erfaßten Flanken der Signale.

Das vom Sensor SE abgehende Sensorsignal S-SE wird zwei Verarbeitungseinheiten, nämlich einem Auf-/Ab-Zähler Z und einem Pulszeitenerfasser PZ zugeführt. Der Pulszeitenerfasser PZ erzeugt aus den zeitlichen Abständen der Flanken der vom Sensor SE erfaßten Flanken ein geschwindigkeitsproportionales Signal, welches einem Schwellwertschalter SS zugeführt wird. Der Auf-/Ab-Zähler Z wertet die Information des Sensorsignals S-SE des Sensors SE unter Zuhilfenahme eines Signals eines Endpositionserfassers EP derart aus, daß ein der absoluten Position und somit dem Verstellhub proportionales Signal entsteht, welches einem Schwellwertschalter SS zugeführt wird. Der Endpositionserfasser EP stellt ein Signal zur Verfügung, welches erlaubt, aus der relativen Position eine absolute Position zu generieren. Die relative Position wird durch richtungsabhängiges Zählen der Flanken der Signale des Sensors SE erzeugt. Beim ersten Erreichen einer Endposition der Scheibe S wird durch den Endpositonserfasser der Auf-/Ab-Zähler Z auf einen Anfangswert gesetzt, d.h. initialisiert; dabei entspricht z.B. die obere Position der Zahl 0, so daß dann die untere Position einen Wert ergibt, der proportional der Länge der Scheibe S ist. Eine Initialisierung durch den Endpositionserfasser EP muß lediglich dann wiederholt werden, wenn das System aufgrund der abgespeicherten Daten seine absolute Position nicht erkennen kann, was z.B. nach einem Spannungsabfall durch Abklemmen der Fahrzeugbatterie der Fall sein kann.

Das Ausgangssignal des Schwellwertschalters SS führt über eine Entscheidungslogik LO zur Ansteuerung des Leistungsschalters LS. Die Entscheidungslogik LO ist derart ausgelegt, daß sich das vom Schwellwertschalter SS kommende Signal nur dann auswirkt, wenn ein Verstellbefehl A-HE für "Heben" bzw. "Schließen" anliegt, also nur in der Verstellrichtung Heben/ Schließen. Der Schwellwertschalter SS steht erfindungsgemäß in solcher Abhängigkeit vom geschwindigkeitsproportionalen Ausgangssignal des Pulszeitenerfassers PZ, daß die Bewegungsenergie der Scheibe S bei Erreichen bzw. kurz vor Erreichen der Endposition der Scheibe S gleich Null geworden ist.

Auf eine derartige Entscheidungslogik LO im Zusammenhang mit einem Verstellbefehl "Senken" bzw. "Öffnen" kann in vorteilhafter Weise in der Regel aus folgenden Gründen zur Aufwandsminderung verzichtet werden:

Beim Anfahren der unteren Endposition "Öffnen" ist es relativ unmaßgeblich, ob die Scheibe S wenige Millimeter mehr oder weniger tief in die untere Dichtung einläuft; von Bedeutung ist lediglich, daß der Elektromotor MO so frühzeitig abgeschaltet ist, daß die Scheibe S auf keinen Fall mit unzulässiger Stoßbelastung gegen den unteren Endanschlag anfährt. Daher erübrigt sich ein jeweils geschwindigkeitsabhängig individuell errechneter Abschaltzeitpunkt; dieser ist lediglich bei einer Initialisierung über den gesamten Hubweg der Scheibe S festgelegt.

Im Gegensatz dazu muß die obere Endposition "Schließen" jeweils genau angefahren werden, damit eine gleichgute Abdichtung in jedem Fall gewährleistet ist; dazu ist eine geschwindigkeitsabhängige, individuell jeweils errechenbare Abschaltung derart vorgesehen, daß einerseits eine möglichst zügige Bewegung der Scheibe S bis kurz vor Erreichen der oberen Endposition, d.h. der Schließstellung, möglich ist und andererseits dann die Scheibe S im Idealfall nach dem Abschalten des Elektromotors MO ohne unzulässige Stoßbelastung aufgrund ihrer zuvor gespeicherten dynamischen Energie in der dichtschließenden oberen Endposition zum Stehen kommt.

Aufgrund von Toleranzen des Gesamtsystems wird die Scheibe S auch bei bester Abstimmung des Systems nicht oder zumindest nicht immer genau in der oberen Endposition zum Stehen kommen. Da die Position der Scheibe S - z.B. nach der beschriebenen Methode inkrementeller Sensor und Initialisierung - gemessen wird, ist bei noch nicht völlig erreichter Endposition die Distanz zwischen der oberen Endposition und dem Punkt, an dem die Scheibe S zum Stehen kam, bekannt. Durch ein einmaliges Wiedereinschalten des Elektromotors MO kann diese kurze Distanz überwunden werden, so daß die Scheibe S dann mit sehr geringer Bewegungsenergie in die Endposition einläuft, wobei die bewegten Teile des System auf der kurzen Distanz keine nennenswerte Geschwindigkeit erreichen und damit auch keine nennenswerte, zu Stoßbelastungen führende Bewegungsenergie aufnehmen können.

Der Gegenstand der Erfindung wurde zuvor anhand eines Fensterheberantriebs für ein Kraftfahrzeug erläutert; in gleicher Weise ist im Rahmen vorliegender Erfindung auch ein Einsatz bei einem ähnlichen Antrieb für ein zwischen einer Öffnungsstellung einerseits und einer Schließstellung andererseits über einen Stellantrieb antreibbares Schließteil, insbesondere bei einem Antrieb für ein Schiebedach eines Kraftfahrzeuges, mitumfaßt.

## Patentansprüche

1. Elektromotorischer Stellantrieb für ein Schließteil, insbesondere für ein Fenster oder Schiebedach in einem Kraftfahrzeug
- mit einer elektronischen Erfassung der jeweiligen Position des Schließteils;
- mit einer elektronischen Erfassung der momentanen Geschwindigkeit des Schließteils;
- mit einer Abschaltung der Energiezufuhr im Sinne eines stoßbelastungsfreien Einfahrens des Schließteils in eine Endposition in Abhängigkeit von der erfaßten momentanen Geschwindigkeit des Schließteils an einer Stelle des Verstellweges, die der Absorption der Bewegungsenergie innerhalb des verbleibenden Endbereichs bis zu der Endposition entspricht.

2. Elektromotorischer Stellantrieb nach Anspruch 1
- mit einer Widerzuschaltung der Energiezufuhr kurz vor Erreichen der Endposition im Sinne einer motorunterstützten Bewegung des Schließteils in die Endpositon.

3. Elektromotorischer Stellantrieb nach Anspruch 2
- mit Anwendung für das Einfahren des Schließteils in eine Schließstellungs-Endposition.

4. Elektromotorischer Stellantrieb nach zumindest einem der vorhergehenden Ansprüche 1-3
- mit einer in Abhängigkeit von einem Sensor (SE) des Elektromotors (MO) des elektromotorischen Stellantriebs die Position bzw. Hubrichtung bzw. Hubgeschwindigkeit des Schließteils bestimmenden Steuervorrichtung (ST).

5. Elektromotorischer Stellantrieb nach zumindest einem der vorhergehenden Ansprüche 1-4
- mit von einem Elektromotor (MO) über ein Getriebe (G) bewegtem Schließteil;
- mit von einer elektromotorseitigen Schneckenwelle (1) angetriebenem Schneckenrad (4) eines als Getriebe (G) vorgesehenen Schneckengetriebes;
- mit einer unmittelbaren formschlüssigen Steckverbindung zwischen dem Schneckenrad (4) und einem abtriebsseitigen Mitnahmeteil für das Schließteil, insbesondere mit einer abtriebsseitigen Mitnehmerscheibe.

6. Elektromotorischer Stellantrieb nach zumindest einem der vorhergehenden Ansprüche 1-4
- mit von einem Elektromotor (MO) über ein Getriebe (G) bewegtem Schließteil;
- mit von einer elektromotorseitigen Schneckenwelle (1) angetriebenem Schneckenrad (4) eines als Getriebe (G) vorgesehenen Schneckengetriebes;
- mit einem Schneckenrad (4), das einstückig, insbesondere als massives Kunststoff-Spritzgußteil, mit dem abtriebsseitigen Mitnahmeteil ausgebildet ist.

## Claims

1. Electromotive actuator for a closing part, in particular for a window or sliding roof in a motor vehicle,
- with electronic recording of the particular position of the closing part;
- with electronic recording of the instantaneous speed of the closing part;
- with cut-off of the energy supply with the effect of moving the closing part into an end position, without any impact stress, in dependence on the recorded instantaneous speed of the closing part at a point of the adjustment travel which corresponds to the absorption of kinetic energy within the remaining end region as far as the end position.

2. Electromotive actuator according to Claim 1,
- with the energy supply being cut in again, shortly before the end position is reached, with the effect of a motor-assisted movement of the closing part into the end position.

3. Electromotive actuator according to Claim 2,
- with its use for moving the closing part into a closing end position.

4. Electromotive actuator according to at least one of the preceding Claims 1 - 3,
- with a control device (ST) which determines the position or travel direction or travel speed of the closing part in dependence on a sensor (SE) of the electric motor (MO) of the electromotive actuator.

5. Electromotive actuator according to at least one of the preceding Claims 1 - 4,
- with a closing part moved by an electric motor (MO) via a gear (G);
- with a worm wheel (4) of a worm gear provided as a gear (G), said worm wheel being driven by a worm shaft (1) on the electric motor side;
- with a direct positive plug connection between the worm wheel (4) and an output drive part for the closing part, in particular with an output driver plate.

6. Electromotive actuator according to at least one of the preceding Claims 1 - 4,
- with a closing part moved by an electric motor (MO) via a gear (G);
- with a worm wheel (4) of a worm gear provided as a gear (G), said worm wheel being driven by a worm shaft (1) on the electric motor side;
- with a worm wheel (4) which is designed integrally, in particular as a solid plastic injection moulding, with the output drive part.

## Revendications

1. Mécanisme d'actionnement par moteur électrique d'une partie qui se ferme, notamment d'une vitre ou d'un toit ouvrant d'un véhicule automobile,
- comprenant une détection électronique de la position de la partie qui se ferme;
- comprenant une détection électronique de la vitesse instantanée de la partie qui se ferme;
- comprenant, en vue de faire venir sans à-coup la partie qui se ferme dans une position d'extrémité, une interruption de l'apport d'énergie en fonction de la vitesse instantanée de la partie qui se ferme, vitesse qui est détectée en un point du trajet qui correspond à l'absorption de l'énergie cinétique dans la plage d'extrémité restante jusqu'à la position d'extrémité.

2. Mécanisme d'actionnement par moteur électrique suivant la revendication 1,
- comprenant un rebranchement de l'apport d'énergie juste avant d'atteindre la position finale, en vue que la venue de la partie qui se ferme dans la position d'extrémité s'effectue avec l'appui du moteur.

3. Mécanisme d'actionnement par moteur électrique suivant la revendication 2,
- comprenant une utilisation pour faire venir la partie qui se ferme en une position d'extrémité correspondant à une position de fermeture.

4. Mécanisme d'actionnement par moteur électrique suivant l'une au moins des revendications 1 à 3 précédentes,
- comprenant un dispositif (ST) de commande déterminant, en fonction d'un capteur (SE) du moteur (MO) électrique du mécanisme d'actionnement par moteur électrique, la position ou le sens de la course ou la vitesse de la course de la partie qui se ferme.

5. Mécanisme d'actionnement par moteur électrique suivant au moins l'une des revendications 1 à 4 précédentes,
- comprenant une partie qui se ferme mue par un moteur (MO) électrique par l'intermédiaire d'une transmission (G);
- comprenant, entraînée par un arbre (1) de vis du côté du moteur électrique, une roue (4) hélicoïdale d'un engrenage à vis sans fin prévu comme transmission (G);
- comprenant une liaison directe à emmanchement par complémentarité de forme entre la roue hélicoïdale (4) et une pièce d'entraînement de la partie qui se ferme qui se trouve du côté mené, notamment d'un disque d'entraînement qui se trouve du côté mené.

6. Mécanisme d'actionnement par moteur électrique suivant l'une au moins des revendications 1 à 4 précédentes,
- comprenant une partie qui se ferme mue par un moteur (MO) électrique par l'intermédiaire d'une transmission (G);
- comprenant, entraînée par un arbre (1) de vis du côté du moteur électrique, une roue (4) hélicoïdale d'un engrenage à vis sans fin prévu comme transmission (G);
- comprenant une roue dentée (4) qui est constituée d'une pièce, notamment sous la forme d'une pièce injectée pleine en matière plastique, avec la partie d'entraînement se trouvant du côté mené.
